# EUROPEAN PATENT SPECIFICATION

(11) **EP 4 226 786 B1**
(45) Date of publication and mention of the grant of the patent: **22.04.2026**
(21) Application number: 22788296.6
(22) Date of filing: 25.03.2022
(51) Int. Cl.: A24F 40/46, A24F 40/50, H01S 3/00

(54) **LASER-BASED AEROSOL GENERATING DEVICE AND HEATING CONTROL METHOD THEREFOR**
LASERBASIERTE AEROSOLERZEUGUNGSVORRICHTUNG UND ERWÄRMUNGSSTEUERUNGSVERFAHREN DAFÜR
DISPOSITIF DE GÉNÉRATION D'AÉROSOL PAR LASER ET PROCÉDÉ DE COMMANDE DE CHAUFFAGE ASSOCIÉ

(30) Priority: 16.04.2021 KR 20210049704
(43) Date of publication of application: 16.08.2023
(73) Proprietor: KT&G Corporation, Daedeok-gu Daejeon 34337 (KR)
(72) Inventor: JUNG, Jin Chul, Daejeon 34128 (KR); GO, Gyoung Min, Daejeon 34128 (KR); BAE, Hyung Jin, Daejeon 34128 (KR); SEO, Jang Won, Daejeon 34128 (KR); JANG, Chul Ho, Daejeon 34128 (KR); JEONG, Min Seok, Daejeon 34128 (KR); JEONG, Jong Seong, Daejeon 34128 (KR)
(74) Representative: Ter Meer Steinmeister & Partner
(86) International application number: PCT/KR2022/004208
(87) International publication number: WO 2022/220440

(56) References cited:
- WO-A1-2022/108225
- KR-A- 20160 117 615
- KR-A- 20160 134 582
- KR-A- 20180 135 026
- KR-A- 20200 106 901
- US-A1- 2017 020 193
- US-A1- 2019 133 188
- US-B2- 10 413 685
- US-B2- 10 561 175

## Description

### [Technical Field]

The present disclosure relates to a laser-based aerosol generation device and a heating control method thereof, and more particularly, to an aerosol generation device having a precise heating control function while ensuring immediate aerosol generation through laser heating and a heating control method performed in the device.

### [Background Art]

In recent years, demand for alternative articles that overcome the disadvantages of traditional cigarettes has increased. For example, demand for devices that electrically heat aerosol-generating articles such as a cigarette or a liquid cartridge to generate an aerosol (e.g., cigarette-type electronic cigarettes or liquid-type electronic cigarettes) has increased, and accordingly, active research has been carried out on electric heating-type aerosol generation devices.

Most electric heating-type aerosol generation devices proposed so far employ a method of heating an aerosol-generating article using an electrically resistive heater or an induction heating-type heater. However, such a heating method has a problem of a long standby time before smoking due to the time taken for a temperature rise of the heater itself and time taken for sufficient heating of the aerosol-generating article. Also, this problem may sometimes decrease user satisfaction with the aerosol generation device.
US 10 413 685 B2 relates to a vaporizer including a reservoir for holding oil, a chamber for holding vapor, a feeder for feeding oil from the reservoir to the chamber, and a heater for heating oil. A feeder can be configured to feed oil from the reservoir to the chamber by capillary action. A vaporizer can include a plug sealingly coupled to the reservoir and configured to slide relative to at least a portion of the reservoir. A heater can include at least one of a laser, a resistance heater, a wire, a coil, a wire at least partially disposed in a housing, and a combination thereof. A vaporizer can include a controller and can be configured to heat a heater to a first temperature for a first time period, reduce the temperature of the heater, and maintain the heater at a second temperature for a second time period.
US 10 561 175 B2 relates to a vaporizer having a housing containing a power source. A laser assembly containing a laser module, such as a laser diode, is electrically coupled to the power source. A laser intensifier thermal transfer module contains a heating plate and is attached to the laser assembly. A cartridge assembly includes an inhalant supply cartridge containing inhalant, such as liquid or concentrate. The inhalant is in contact with the heating plate by way of a wick that draws the inhalant out of the supply cartridge. The laser assembly receives electric current from the power source to activate the laser module causing the laser module to emit a beam directed toward the heating plate. The heating plate focuses the beam and generates heat sufficient to vaporize the inhalant. The inhalant is drawn through an air passageway in the cartridge for inhalation by the user.

### [Disclosure]

### [Technical Problem]

Some embodiments of the present disclosure are directed to providing an aerosol generation device capable of ensuring immediate aerosol generation and a heating control method performed in the device.

Some embodiments of the present disclosure are also directed to providing an aerosol generation device having a precise heating function and a heating control method performed in the device.

Some embodiments of the present disclosure are also directed to providing an aerosol generation device having an efficient heating control function and a heating control method performed in the device.

Objectives of the present disclosure are not limited to the above-mentioned objectives, and other unmentioned objectives should be clearly understood by those of ordinary skill in the art to which the present disclosure pertains from the description below.

### [Technical Solution]

Some embodiments of the present disclosure provide an aerosol generation device including an aerosol-generating article, a laser radiation part configured to radiate a laser and heat the aerosol-generating article to generate an aerosol, and a controller configured to control the laser radiation part so that a radiation area of the laser is adjusted.

In some embodiments, the aerosol-generating article may be made of a cylindrical aerosol-forming substrate that is not surrounded by a wrapper.

In some embodiments, the aerosol-generating article may be made of a flat aerosol-forming substrate that is not surrounded by a wrapper.

In some embodiments, the controller may increase a size of the radiation area of the laser as a designated point in time elapses.

In some embodiments, the adjusted size of the radiation area may be in a range of 1 mm² to 10 mm².

In some embodiments, the laser radiation part may include a focal length adjustable lens, and the controller may adjust a focal length of the lens to adjust the radiation area of the laser.

In some embodiments, the controller controls heating of the aerosol-generating article on the basis of characteristics of the laser reflected from the aerosol-generating article.

In some embodiments, at least one of the aerosol-generating article and the laser radiation part may be configured to be movable, and the controller may adjust a movement speed of the at least one to control heating of the aerosol-generating article.

Some embodiments of the present disclosure provide a heating control method of an aerosol generation device including a laser radiation part, the heating control method including controlling the laser radiation part to adjust an area of laser radiated toward an aerosol-generating article.

Some embodiments of the present disclosure provide a computer program that is combined with hardware and stored in computer-readable recording media to execute controlling the laser radiation part to adjust an area of laser radiated toward an aerosol-generating article.

### [Advantageous Effects]

According to some embodiments of the present disclosure, heating of an aerosol-generating article can be precisely controlled on the basis of a radiation area of laser, reflection characteristics of the laser, and/or a movement speed of the aerosol-generating article (or a laser radiation part). For example, by adjusting (setting) the radiation area of the laser to have an appropriate size, more precise temperature control can be performed, and a problem in which a local surface of an aerosol-forming substrate is carbonized due to the laser being focused thereon can also be prevented. Alternatively, by accurately determining, on the basis of characteristics of the reflected laser, whether carbonization of the aerosol-forming substrate has occurred, a problem in which a carbonized site is heated again can also be prevented. Further, as the heating control is precisely performed, development of a burnt taste during smoking can be limited, and a user's smoking satisfaction can be improved.

Also, by employing a laser heating method and a thin aerosol-forming substrate, immediate aerosol generation can be ensured. Specifically, by heating a surface of the thin aerosol-forming substrate with the laser, an aerosol can be generated immediately without a preheating time. Accordingly, a smoking standby time can be minimized, and user satisfaction with the aerosol generation device can be improved.

Also, an aerosol-generating article and/or a laser radiation part can be configured to move during the heating. Also, as a site irradiated with the laser changes due to such movement, the entire aerosol-forming substrate can be effectively heated even when the laser radiation part is provided as a small number of laser radiation parts.

Also, by placing a laser reflection part at a suitable position or placing a laser guide part in a form that passes through an aerosol therearound, a problem in which laser heating performance is degraded due to an aerosol around an aerosol-forming substrate can be easily addressed.

In addition, since instantaneous heating (temperature rise) and immediate aerosol generation are possible using the laser, there is no need to continuously supply power to a heater part (that is, a laser radiation part). For example, it is not necessary to continuously supply power as when heating a cigarette using an electrically resistive heater, and power may be supplied to the heater part only when aerosol generation is necessary (e.g., upon a puff). Accordingly, power consumed during smoking is significantly reduced, and thus heating efficiency can be improved.

The advantageous effects of the present disclosure are not limited to those mentioned above, and other unmentioned advantageous effects should be clearly understood by those of ordinary skill in the art from the description below.

### [Description of Drawings]

FIG. 1 is an exemplary view schematically illustrating an aerosol generation device according to some embodiments of the present disclosure.
FIGS. 2 and 3 are exemplary views for describing the form of an aerosol-generating article according to some embodiments of the present disclosure.
FIGS. 4 and 5 are exemplary views for describing a heating method of an aerosol generation device according to a first embodiment of the present disclosure.
FIG. 6 is an exemplary view for describing a heating method of an aerosol generation device according to a second embodiment of the present disclosure.
FIGS. 7 and 8 are exemplary views for describing a heating method of an aerosol generation device according to a third embodiment of the present disclosure.
FIGS. 9 to 11 are exemplary views for describing a heating method of an aerosol generation device according to a fourth embodiment of the present disclosure.
FIG. 12 is an exemplary view for describing a heating control method of an aerosol generation device according to a first embodiment of the present disclosure.
FIGS. 13 and 14 are exemplary views for describing a heating control method of an aerosol generation device according to a second embodiment of the present disclosure.
FIG. 15 is an exemplary view for describing a heating control method of an aerosol generation device according to a third embodiment of the present disclosure.

### [Modes of the Invention]

Hereinafter, exemplary embodiments of the present disclosure will be described in detail with reference to the accompanying drawings. Advantages and features of the present disclosure and methods of achieving the same should become clear from embodiments described in detail below with reference to the accompanying drawings.

In assigning reference numerals to components of each drawing, it should be noted that the same reference numerals are assigned to the same components where possible even when the components are illustrated in different drawings. Also, in describing the present disclosure, when detailed description of a known related configuration or function is deemed as having the possibility of obscuring the gist of the present disclosure, the detailed description thereof will be omitted.

Unless otherwise defined, all terms including technical or scientific terms used in this specification have the same meaning as commonly understood by those of ordinary skill in the art to which the present disclosure pertains. Terms defined in commonly used dictionaries should not be construed in an idealized or overly formal sense unless expressly so defined herein. Terms used in this specification are for describing the embodiments and are not intended to limit the present disclosure. In this specification, a singular expression includes a plural expression unless the context clearly indicates otherwise.

Also, in describing components of the present disclosure, terms such as first, second, A, B, (a), and (b) may be used. Such terms are only used for distinguishing one component from another component, and the essence, order, sequence, or the like of the corresponding component is not limited by the terms. In a case in which a certain component is described as being "connected," "coupled," or "linked" to another component, it should be understood that, although the component may be directly connected or linked to the other component, still another component may also be "connected," "coupled," or "linked" between the two components.

The terms "comprises" and/or "comprising" used herein do not preclude the possibility of presence or addition of one or more components, steps, operations, and/or devices other than those mentioned.

Prior to describing various embodiments of the present disclosure, some terms used in the following embodiments will be clarified.

In the following embodiments, "aerosol-forming substrate" may refer to a material that is able to form an aerosol. The aerosol may include a volatile compound. The aerosol-forming substrate may be a solid or liquid.

For example, solid aerosol-forming substrates may include solid materials based on tobacco raw materials such as reconstituted tobacco leaves, shredded tobacco, and reconstituted tobacco, and liquid aerosol-forming substrates may include liquid compositions based on nicotine, tobacco extracts, and/or various flavoring agents. However, the scope of the present disclosure is not limited to the above-listed examples.

As a more specific example, a liquid aerosol-forming substrate may include at least one of propylene glycol (PG) and glycerin (GLY) and may further include at least one of ethylene glycol, dipropylene glycol, diethylene glycol, triethylene glycol, tetraethylene glycol, and oleyl alcohol. As another example, the aerosol-forming substrate may further include at least one of nicotine, moisture, and a flavoring material. As still another example, the aerosol-forming substrate may further include various additives such as cinnamon and capsaicin. The aerosol-forming substrate may not only include a liquid material with high fluidity but also include a material in the form of a gel or a solid. In this way, as the components constituting the aerosol-forming substrate, various materials may be selected according to embodiments, and composition ratios thereof may also vary according to embodiments.

In the following embodiments, "aerosol generation device" may refer to a device that generates an aerosol using an aerosol-forming substrate in order to generate an aerosol that can be inhaled directly into the user's lungs through the user's mouth.

In the following embodiments, "aerosol-generating article" may refer to an article that is able to generate an aerosol. The aerosol-generating article may include an aerosol-forming substrate.

In the following embodiments, "puff" refers to inhalation by a user, and the inhalation may be a situation in which a user draws smoke into his or her oral cavity, nasal cavity, or lungs through the mouth or nose.

In the following embodiments, "longitudinal direction" may refer to a direction corresponding to a longitudinal axis of an aerosol generation device or aerosol-generating article.

In the following embodiments, "sheet" may refer to a thin layer component whose width and length are substantially larger than a thickness thereof. The term "sheet" may be interchangeably used with the term "web" or "film" in the art.

Hereinafter, various embodiments of the present disclosure will be described in detail with reference to the accompanying drawings.

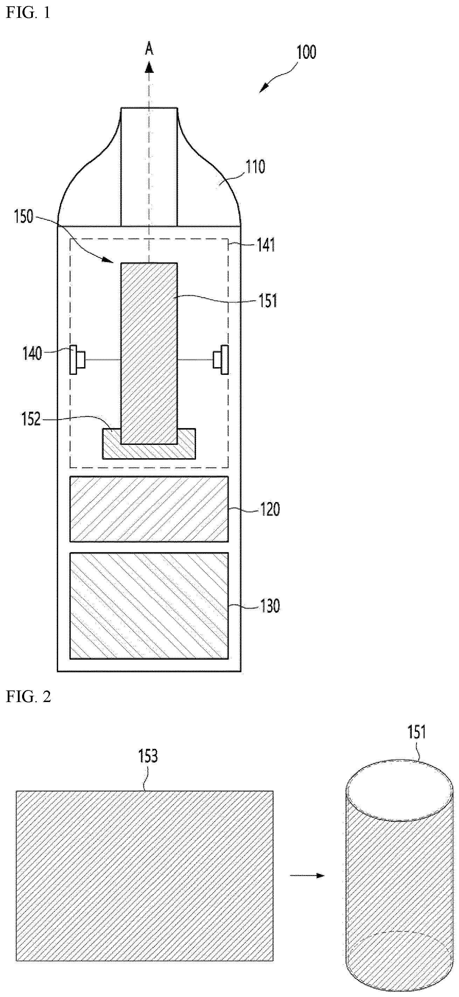

FIG. 1 is an exemplary view schematically illustrating an aerosol generation device 100 according to some embodiments of the present disclosure.

As illustrated in FIG. 1, the aerosol generation device 100 according to the embodiments may include a housing, a mouthpiece part 110, a heater part, a battery 130, and a controller 120. However, only the components relating to the embodiment of the present disclosure are illustrated in FIG. 1. Therefore, those of ordinary skill in the art to which the present disclosure pertains should understand that the aerosol generation device 100 may further include general-purpose components other than the components illustrated in FIG. 1. For example, the aerosol generation device 100 may further include an input module (e.g., a button, a touchable display, etc.) for receiving a command or the like from a user and an output module (e.g., a light emitting module (LED), a display, or a vibration module) configured to output a state, smoking information, or the like of the aerosol generation device 100. Hereinafter, each component of the aerosol generation device 100 will be described.

The housing may form an exterior of the aerosol generation device 100. The housing may be implemented using a material that can protect components inside the housing from an external force.

In some embodiments, the housing may form a space into which an aerosol-generating article 150 is inserted. Alternatively, the housing may be formed of a structure that allows the aerosol-generating article 150 to be inserted into a heating space 141 therein. For example, the housing may have a structure of which one surface is open (e.g., a front surface is open) or one portion is separated (e.g., an upper portion and a lower portion are separated), and a user may open the one surface or separate the one portion to insert (mount) the aerosol-generating article 150 into (on) the heating space 141.

Next, the mouthpiece part 110 may be disposed at one end of the aerosol generation device 100 and serve as a mouthpiece that comes into contact with the oral region of the user. The user may inhale an aerosol by making a puff through the mouthpiece part 110. The mouthpiece part 110 may be implemented in a form that occupies a portion of the housing or may be implemented in the form of a separate structure mounted on the aerosol generation device 100.

Next, the heater part may heat the aerosol-generating article 150 disposed in the heating space 141 to generate an aerosol. The operation of the heater part may be controlled by the controller 120.

As illustrated, the heater part may include one or more laser radiation parts 140. The laser radiation part 140 may irradiate a surface of the aerosol-generating article 150 with laser to immediately generate an aerosol without a preheating time. The laser radiation part 140 is a module configured to emit (radiate) a laser beam and may be implemented using a semiconductor-type laser diode, for example, but the scope of the present disclosure is not limited thereto. Also, for example, the laser beam may be light having an infrared wavelength, but the scope of the present disclosure is not limited thereto. In some cases, the laser radiation part 140 may also be referred to as "laser beam source 140."

FIG. 1 illustrates an example in which the aerosol generation device 100 includes two laser radiation parts 140, but of course, the aerosol generation device 100 may include a single laser radiation part 140 or include three or more laser radiation parts 140.

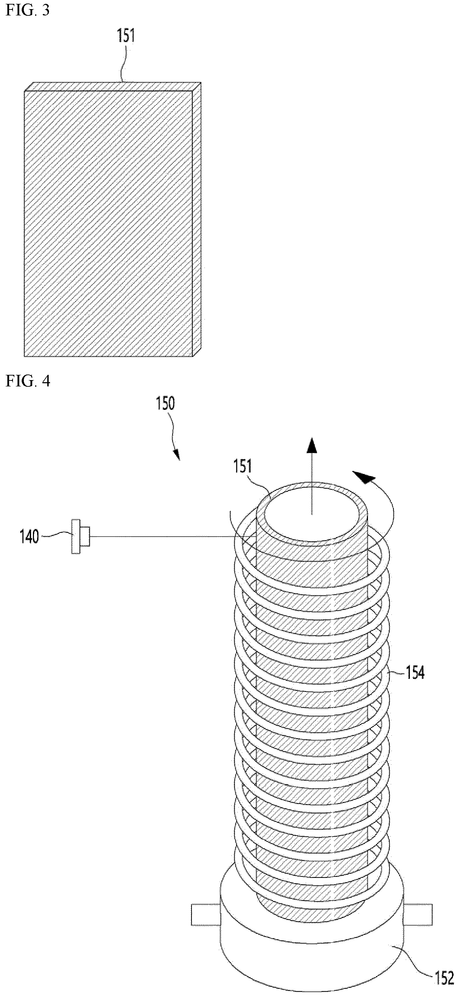

A specific configuration and operation of the heater part will be described in detail below with reference to FIG. 4 and so on.

Meanwhile, the aerosol-generating article 150 may include a solid aerosol-forming substrate 151. For example, as illustrated, the aerosol-generating article 150 may consist of the aerosol-forming substrate 151 and a holder 152 thereof. However, the scope of the present disclosure is not limited thereto.

Also, the aerosol-generating article 150 may have a structure that allows a surface of the aerosol-forming substrate 151 to be exposed to the outside and directly heated by laser. For example, as illustrated, the aerosol-generating article 150 may have a structure in which the aerosol-forming substrate 151 not surrounded by a wrapper is mounted on the holder 152. However, the scope of the present disclosure is not limited thereto.

Also, the aerosol-generating article 150 may be manufactured in the form of a cartridge. In other words, the aerosol-generating article 150 may be manufactured in a form in which the aerosol-forming substrate 151 is replaced after being exhausted. However, the scope of the present disclosure is not limited thereto.

The aerosol-forming substrate 151 may be designed and manufactured so that the form, thickness, and/or size thereof vary. However, in order to make good use of the characteristics of the laser beam that heats a local surface, it may be preferable to manufacture the aerosol-forming substrate 151 to have a small thickness.

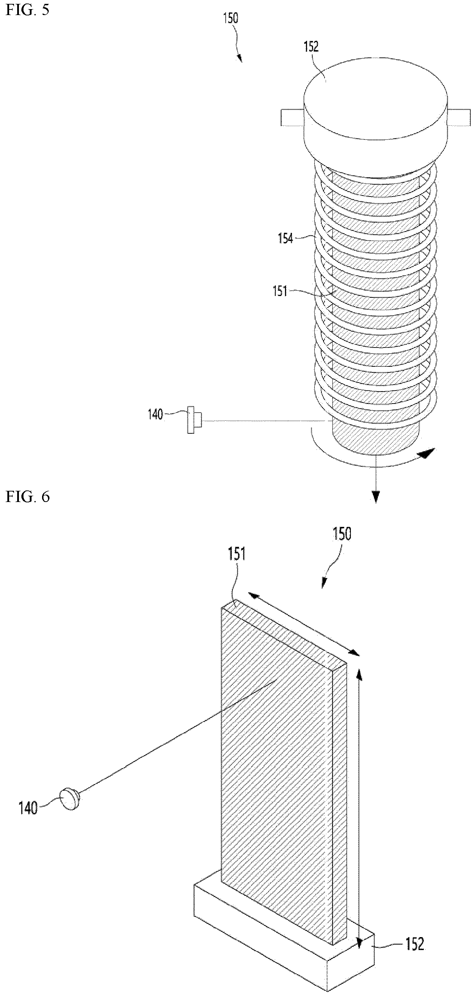

In some embodiments, as illustrated in FIG. 2, the aerosol-forming substrate 151 may be manufactured in a cylindrical shape. For example, a sheet-type (or flat-type) aerosol-forming substrate 153 (e.g., a sheet-type tobacco material such as reconstituted tobacco leaves) may be processed to manufacture the aerosol-forming substrate 151 in the form of a hollow cylinder. In this case, immediate aerosol generation can be ensured by laser heating, and the entire aerosol-forming substrate 151 can be easily heated. More specifically, even when only an outer surface of the aerosol-forming substrate 151 is heated by laser, due to the aerosol-forming substrate 151 having a small thickness, the inside of the aerosol-forming substrate 151 can also be heated, and an aerosol can be generated immediately. Also, as will be described below, the entire aerosol-forming substrate 151 can be easily heated due to rotation of the aerosol-forming substrate 151 (refer to description given below with reference to FIGS. 4 and 5).

In some other embodiments, as illustrated in FIG. 3, the aerosol-forming substrate 151 may be manufactured in a flat shape. For example, a sheet-type aerosol-forming substrate (e.g., 153) may be used as it is, or the sheet-type aerosol-forming substrate (e.g., 153) may be stacked in multiple layers to manufacture the aerosol-forming substrate 151. Even in this case, immediate aerosol generation can be ensured by laser heating, and the entire aerosol-forming substrate 151 can be easily heated. More specifically, even when only an outer surface of the aerosol-forming substrate 151 is heated by laser, due to the aerosol-forming substrate 151 having a small thickness, the inside of the aerosol-forming substrate 151 can also be heated, and an aerosol can be generated immediately. Also, as will be described below, the entire aerosol-forming substrate 151 can be easily heated due to linear movement of the aerosol-forming substrate 151 (refer to description given below with reference to FIG. 6).

In still some other embodiments, the aerosol-forming substrate 151 may also be manufactured in another form as illustrated in FIG. 2 or 3.

In the previous embodiments, a thickness of the processed aerosol-forming substrate 151 or sheet-type aerosol-forming substrate (e.g., 153) may be less than or equal to about 5 mm, preferably, less than or equal to about 3 mm, 2 mm, or 1 mm. Within such numerical ranges, the inside of the aerosol-forming substrate 151 can also be sufficiently heated by the radiated laser.

Also, the size of the aerosol-forming substrate 151 may be appropriately determined in consideration of the size of the heating space 141, the number of times the aerosol-generating article 150 is smoked, etc. For example, the size of the aerosol-forming substrate 151 may be determined on the basis of a target number of times the aerosol-generating article 150 is smoked. However, the present disclosure is not limited thereto.

Meanwhile, according to some embodiments of the present disclosure, at least one of the aerosol-generating article 150 and the laser radiation part 140 may be configured to move during heating. Also, a site irradiated with the laser (that is, a site of the aerosol-forming substrate 151 that is irradiated with the laser or a heating point of the aerosol-forming substrate 151) may change due to the movement. Here, the movement may not only include rotation and linear movement but also include movement caused by angle adjustment at a fixed position. In the present embodiment, the movement of the aerosol-generating article 150 and the laser radiation part 140 may be implemented in a manual manner or an automatic manner. For example, the movement may be automatically performed by control of the controller 120. The present embodiment will be described in detail below with reference to FIGS. 4 to 8.

Next, the battery 130 may supply power used to operate the aerosol generation device 100. For example, the battery 130 may supply power to allow the heater part (e.g., laser radiation part 140) to heat the aerosol-forming substrate 151 included in the aerosol-generating article 150 and may supply power required for the operation of the controller 120.

Next, the controller 120 may control the overall operation of the aerosol generation device 100. For example, the controller 120 may control the operation of the heater part (e.g., laser radiation part 140) and the battery 130 and may also control the operation of other components included in the aerosol generation device 100. The controller 120 may control the power supplied by the battery 130, the heating operation of the heater part (e.g., laser radiation part 140), and the like. For example, the controller 120 may control a radiation intensity, a radiation shape, a radiation area, etc. of the laser radiation part 140 and may also control the movement of the laser radiation part 140 and/or aerosol-generating article 150. Also, the controller 120 may check a state of each of the components of the aerosol generation device 100 and determine whether the aerosol generation device 100 is in an operable state.

In some embodiments, in response to detection of a user's puff, the controller 120 may control the battery 130 so that power is supplied to the laser radiation part 140. For example, the controller 120 may perform control so that power is supplied to the laser radiation part 140 only upon a puff instead of being continuously supplied to the laser radiation part 140. In this case, the power consumption of the aerosol generation device 100 can be significantly reduced, and heating efficiency can be significantly improved.

The controller 120 may be implemented with at least one processor. The processor may also be implemented with an array of a plurality of logic gates or implemented with a combination of a general-purpose microprocessor and a memory which stores a program that may be executed by the microprocessor. Also, those of ordinary skill in the art to which the present disclosure pertains should clearly understand that the controller 120 may also be implemented with other forms of hardware.

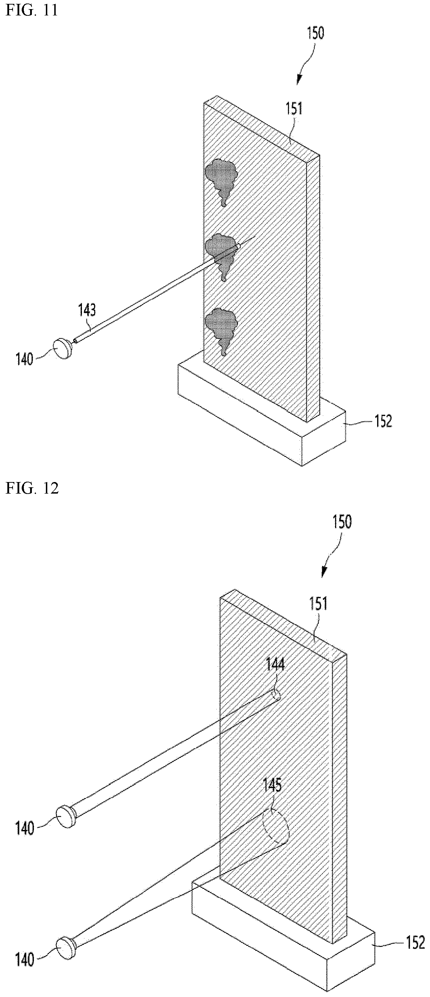

Additional control operations of the controller 120 will be described below with reference to FIG. 12 and so on.

The aerosol generation device 100 according to some embodiments of the present disclosure has been schematically described above with reference to FIGS. 1 to 3. According to the above description, immediate aerosol generation can be ensured by employing the laser heating method and the aerosol-forming substrate 151 having a small thickness. Specifically, by heating a surface of the aerosol-forming substrate 151 having a small thickness by laser, an aerosol can be generated immediately without a preheating time. Accordingly, a smoking standby time can be minimized, and user satisfaction with the aerosol generation device 100 can be improved.

Hereinafter, a heating method and a heating control method that are performed in a laser-based aerosol generation device will be described with reference to FIG. 4 and so on. In order to provide convenience of understanding, description will be continued assuming that the methods described below are performed in the aerosol generation device 100 illustrated in FIG. 1.

First, a heating method of an aerosol generation device according to a first embodiment of the present disclosure will be described with reference to FIGS. 4 and 5.

As illustrated in FIGS. 4 and 5, the present embodiment relates to a method of heating the aerosol-generating article 150 on the basis of rotation of the laser radiation part 140 and/or aerosol-generating article 150.

For example, as illustrated in FIG. 4, the laser radiation part 140 may radiate laser at a fixed position, and the aerosol-generating article 150 may slightly move upward (e.g., toward the mouthpiece part 110) with each rotation. Alternatively, as illustrated in FIG. 5, the aerosol-generating article 150 may move downward with the rotation. In other words, as a site irradiated with the laser changes due to the rotation of the aerosol-generating article 150, the aerosol-forming substrate 151 may be heated. In this case, the entire aerosol-forming substrate 151 can be easily heated even with a small number of laser radiation parts 140.

In the previous example, the rotation of the aerosol-generating article 150 or aerosol-forming substrate 151 may be implemented in various ways. For example, as illustrated in FIG. 4 or 5, the aerosol-generating article 150 may further include a rotation guide part 154 formed in a spiral shape (or in the shape of a spring). Also, the rotation of the aerosol-generating article 150 may be implemented by the holder 152 rotating along the rotation guide part 154. However, the scope of the present disclosure is not limited thereto.

As another example, the laser radiation part 140 may radiate a laser while rotating around the aerosol-generating article 150.

Hereinafter, a heating method of an aerosol generation device according to a second embodiment of the present disclosure will be described with reference to FIG. 6.

As illustrated in FIG. 6, the present embodiment relates to a method of heating the aerosol-generating article 150 on the basis of linear movement of the laser radiation part 140 or aerosol-generating article 150.

For example, as illustrated in FIG. 6, the laser radiation part 140 may radiate laser at a fixed position, and the aerosol-generating article 150 may move in a longitudinal direction (that is, a vertical direction) or a direction perpendicular thereto (that is, a horizontal direction). In other words, as a site irradiated with the laser changes (e.g., changes vertically or horizontally) due to the linear movement of the aerosol-generating article 150, the aerosol-forming substrate 151 may be heated. In this case, the entire aerosol-forming substrate 151 can be easily heated even with a small number of laser radiation parts 140.

In the previous example, the linear movement of the aerosol-generating article 150 may be implemented in various ways and may be implemented in any way.

As another example, the laser radiation part 140 may radiate laser while moving in the longitudinal direction or a direction perpendicular thereto.

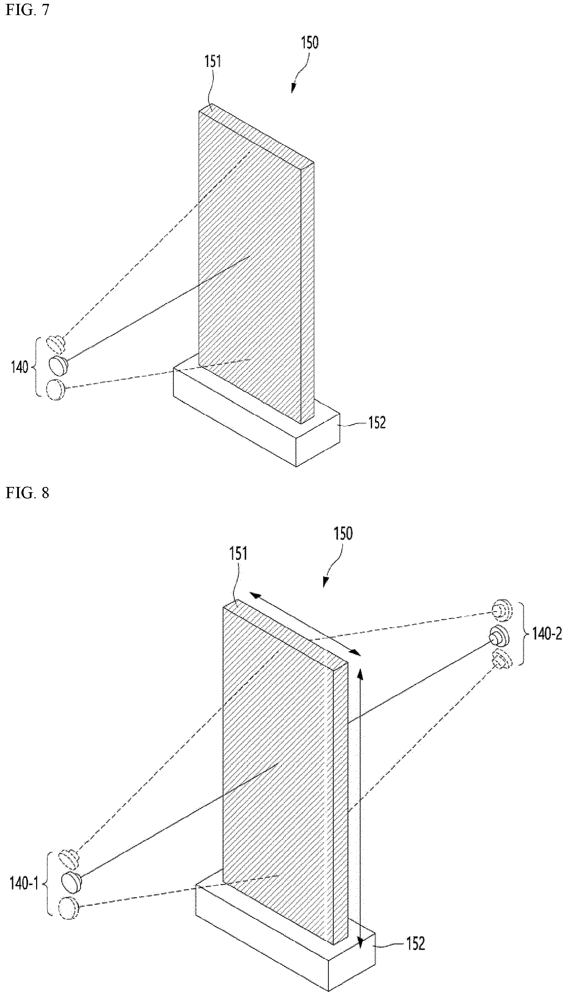

Hereinafter, a heating method of an aerosol generation device according to a third embodiment of the present disclosure will be described with reference to FIG. 7. Also, hereinafter, in order to provide convenience of understanding, description will be continued assuming that the aerosol-forming substrate 151 has a flat shape. However, the description below may be applied without substantial changes even when the aerosol-forming substrate 151 has a cylindrical shape or another shape.

As illustrated in FIG. 7, the present embodiment relates to a method of heating the aerosol-generating article 150 on the basis of angle adjustment of the laser radiation part 140 or aerosol-generating article 150.

For example, as illustrated in FIG. 7, the laser radiation part 140 may heat the aerosol-forming substrate 151 while changing an angle of radiation at a fixed position. As a more specific example, the laser radiation part 140 may heat the aerosol-forming substrate 151 while changing a vertical angle or horizontal angle. In other words, as a site irradiated with the laser changes (e.g., changes vertically or horizontally) due to the angle adjustment of the laser radiation part 140, the aerosol-forming substrate 151 may be heated. In this case, the entire aerosol-forming substrate 151 can be easily heated even with a small number of laser radiation parts 140.

As another example, the laser radiation part 140 may radiate laser at a fixed angle, and a vertical or horizontal angle (slope) of the aerosol-generating article 150 may change.

Meanwhile, FIG. 7 illustrates an example in which a single laser radiation part 140 is disposed, but a plurality of laser radiation parts 140 may be disposed as mentioned above. For example, a first laser radiation part configured to heat one surface of the aerosol-forming substrate 151 and a second laser radiation part configured to heat another surface (e.g., the opposite surface) of the aerosol-forming substrate 151 may be disposed.

Hereinafter, a heating method of an aerosol generation device according to a fourth embodiment of the present disclosure will be described with reference to FIG. 8.

As illustrated in FIG. 8, the present embodiment relates to a method of heating the aerosol-generating article 150 on the basis of angle adjustment of laser radiation parts 140-1 and 140-2 and linear movement (or rotation) of the aerosol-generating article 150. FIG. 8 illustrates an example in which the plurality of laser radiation parts 140-1 and 140-2 are disposed, but of course, a single laser radiation part 140 may be disposed in some cases.

For example, as illustrated in FIG. 8, a first laser radiation part 140-1 may radiate a laser toward one surface of a flat-shaped aerosol-forming substrate 151 while changing an angle of radiation, and a second laser radiation part 140-2 may radiate a laser toward another surface (e.g., the opposite surface) of the aerosol-forming substrate 151 while changing an angle of radiation. Also, the aerosol-generating article 150 may perform linear movement (or rotation). As a more specific example, each of the laser radiation parts 140-1 and 140-2 may heat the aerosol-generating article 150 while changing a vertical angle, and the aerosol-generating article 150 may perform linear movement (e.g., linear reciprocation) in the horizontal direction (that is, the direction perpendicular to the longitudinal direction). Alternatively, each of the laser radiation parts 140-1 and 140-2 may heat the aerosol-generating article 150 while changing a horizontal angle, and the aerosol-generating article 150 may perform linear movement (e.g., linear reciprocation) in the vertical direction (that is, the longitudinal direction). In any case, due to the angle adjustment of the laser radiation parts 140-1 and 140-2 and the linear movement of the aerosol-generating article 150, the entire aerosol-forming substrate 151 can be easily heated, and a degree (distance) of movement of the aerosol-generating article 150 can be significantly reduced.

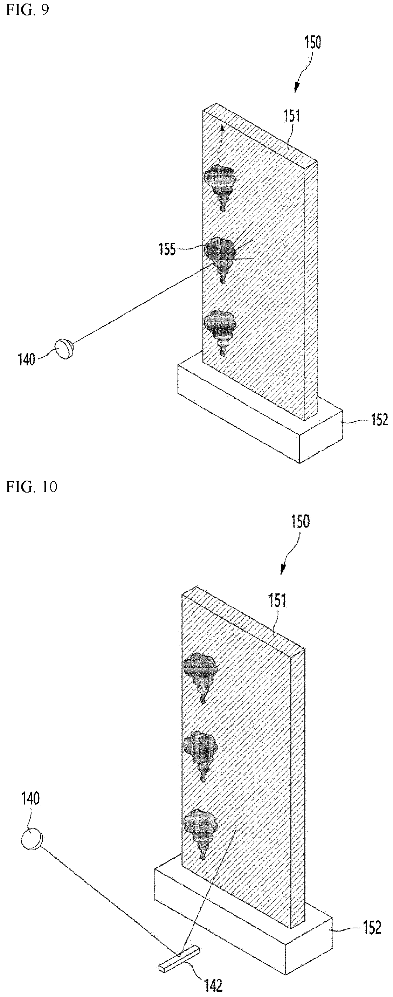

Hereinafter, a heating method of an aerosol generation device according to a fifth embodiment of the present disclosure will be described with reference to FIGS. 9 to 11.

The present embodiment relates to a method of addressing a problem in which efficiency of laser heating is degraded as an aerosol is generated, and in order to provide convenience of understanding, this problem will be described first with reference to FIG. 9.

As illustrated in FIG. 9, as the aerosol-forming substrate 151 is heated by laser heating, an aerosol 155 may be formed around the aerosol-forming substrate 151. However, the aerosol 155 formed in this way may act as a factor that degrades laser heating efficiency. For example, laser heating efficiency may be degraded due to absorption, scattering, etc. of a laser beam that occurs due to the aerosol 155 disposed in a laser radiation path. That is, the aerosol 155 may cause a problem in which energy of a laser beam that reaches the aerosol-forming substrate 151 is reduced.

The heater part according to some embodiments of the present disclosure, which is for addressing the above problem, may further include a laser reflection part 142 as illustrated in FIG. 10. The laser reflection part 142 may be disposed below the aerosol-generating article 150 and reflect the radiated laser toward the aerosol-generating article 150 disposed above. In this case, as the radiated laser bypasses the aerosol 155 around the aerosol-forming substrate 151 to reach the aerosol-forming substrate 151, or the laser is reflected toward an airflow (that is, upward), contact between the laser and the aerosol 155 can be minimized. Also, accordingly, the problem in which the laser heating efficiency is degraded due to the aerosol 155 can be addressed.

In some other embodiments of the present disclosure, as illustrated in FIG. 11, the heater part may further include a laser guide part 143 configured to guide the radiated laser to the aerosol-forming substrate 151. The laser guide part 143 may be formed in the shape of a tube (e.g., a waveguide, a diffuser) and may be disposed in a form that passes through the aerosol 155 around the aerosol-forming substrate 151. In this case, without loss of energy, the radiated laser can reach the aerosol-forming substrate 151 through a path inside the laser guide part 143. Thus, the problem in which the laser heating efficiency is degraded due to the aerosol 155 can be addressed.

The heating methods of an aerosol generation device according to the first to fifth embodiments have been described above with reference to FIGS. 4 to 11. Although each of the embodiments has been separately described, the above-described embodiments may be combined in various forms.

Hereinafter, a heating control method of an aerosol generation device will be described with reference to FIG. 12 and so on.

The heating control method which will be described below may be implemented using one or more instructions executed by a computing module (e.g., the controller 120) including a processor. Also, hereinafter, in order to provide convenience of understanding, description will be continued assuming that the heating control method is performed by the controller 120 of the aerosol generation device 100 illustrated in FIG. 1. Therefore, when the subject performing a specific step/operation is omitted, the specific step/operation may be understood as being performed by the illustrated module 120.

First, a heating control method of an aerosol generation device according to a first embodiment of the present disclosure will be described with reference to FIG. 12.

As illustrated in FIG. 12, the present embodiment relates to a method of performing heating control on the basis of a radiation area (or radiation shape) of laser. For example, the controller 120 may control the laser radiation part 140 to adjust the radiation area of the laser, and as the radiation area is adjusted, heating of the aerosol-generating article 150 can be precisely controlled.

Specifically, when it is assumed that the laser radiation part 140 radiates laser with the same intensity (output), a heating temperature (or heating strength) is inevitably changed according to areas of regions 144 and 145 irradiated with the laser. For example, since an area of a first radiation region 144 is smaller than an area of a second radiation region 145, the first radiation region 144 may be heated at a higher temperature than the second radiation region 145. This is because the smaller the radiation area, the more the laser energy is concentrated, and the larger the radiation area, the more the laser energy is dispersed and thus the heating strength per unit area is decreased.

Therefore, the controller 120 may adjust the radiation area (that is, the size of the radiation area) to perform a precise heating control function for the aerosol-generating article 150. However, a specific method of heating control may vary.

In one example, the controller 120 may increase or decrease the size of the radiation area on the basis of the heating temperature of the aerosol-generating article 150. For example, in response to determination that the heating temperature of the aerosol-generating article 150 is a reference value or higher, the controller 120 may increase the size of the radiation area. Alternatively, in response to determination that the heating temperature of the aerosol-generating article 150 is lower than the reference value, the controller 120 may decrease the size of the radiation area. According to such control, the heating temperature of the aerosol-generating article 150 can be precisely controlled.

As another example, the controller 120 may increase or decrease the size of the radiation area on the basis of a heating state (e.g., degree of carbonization) of the aerosol-forming substrate 151. For example, in response to determination that a specific site of the aerosol-forming substrate 151 is carbonized (heated) to a reference value or more, the controller 120 may increase the size of the radiation area. Alternatively, in response to determination that a specific site of the aerosol-generating article 150 is carbonized (heated) less than the reference value, the controller 120 may decrease the size of the radiation area. According to such control, a problem in which a burnt taste develops during smoking can be significantly alleviated.

As still another example, the controller 120 may increase or decrease the size of the radiation area on the basis of the passage of smoking time. Specifically, the controller 120 may heat the aerosol-generating article 150 with a relatively small radiation area for immediate aerosol generation at the beginning of smoking and may heat the aerosol-generating article 150 with a relatively large radiation area to prevent carbonization or the like from the middle of smoking. That is, the controller 120 may increase the size of the radiation area of the laser as a designated point in time elapses. In some cases, in order to enhance a tobacco smoke taste towards the end of smoking, the controller 120 may heat the aerosol-generating article 150 with a relatively small radiation area again towards the end of smoking.

In the above examples, the adjusted (increased) size of the radiation area of the laser may be in a range of about 0.5 mm² to 20 mm², 1 mm² to 10 mm², 1 mm² to 8 mm², 1 mm² to 6 mm², 2 mm² to 6 mm², or about 2 mm² to 4 mm². Within such numerical ranges, the aerosol-forming substrate 151 can be properly heated. For example, when the size of the radiation area is too small (e.g., less than 0.5 mm²), laser energy may be excessively concentrated, and a local surface of the aerosol-forming substrate 151 may be carbonized. Conversely, when the size of the radiation area is too large, (e.g., greater than 10 mm²), laser energy may be excessively dispersed, and the aerosol-forming substrate 151 may be barely heated at all.

Meanwhile, a specific method of adjusting the radiation area of the laser may also vary.

In one example, the radiation area of the laser may be adjusted by adjusting a focal length. This is because, when the focal length is changed while a distance between the laser radiation part 140 and the aerosol-generating article 150 is constant, the area irradiated with the laser is changed. As a more specific example, when the laser radiation part 140 includes a focal length adjustable lens (e.g., a voice coil motor (VCM) lens), the controller 120 may adjust the focal length of the lens to adjust the radiation area of the laser. However, the scope of the present disclosure is not limited thereto.

As another example, a plurality of lenses with different characteristics (e.g., focal length, laser radiation area, etc.) may be provided, and the radiation area may be adjusted by changing (replacing) a lens of the laser radiation part 140 with another lens.

As still another example, the radiation area may be adjusted by adjusting a radiation distance from the laser radiation part 140 to the aerosol-generating article 150. This is because, when the distance between the laser radiation part 140 and the aerosol-generating article 150 is changed when the focal length of the lens of the laser radiation part 140 is constant, the area irradiated with the laser is changed. As a specific example, the controller 120 may move at least one of the laser radiation part 140 and/or the aerosol-generating article 150 to adjust the radiation distance.

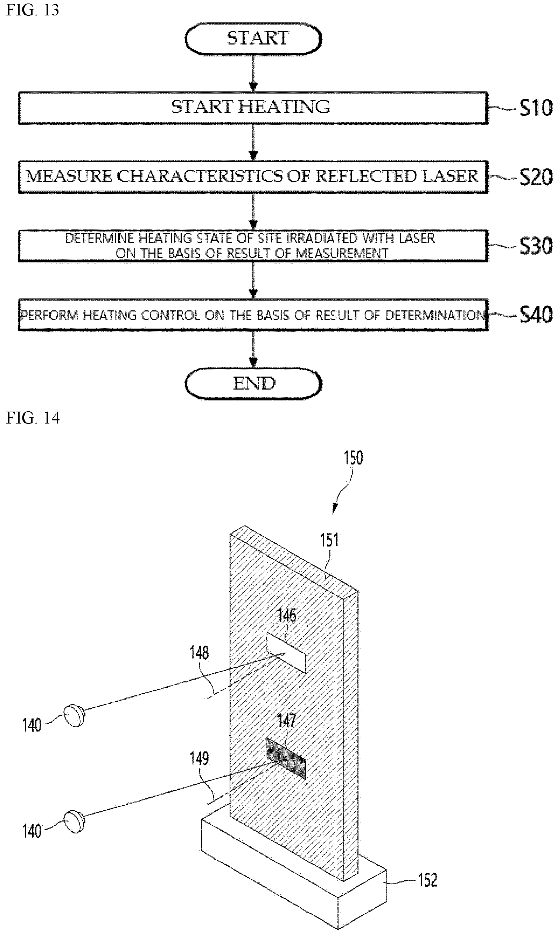

Hereinafter, a heating control method of an aerosol generation device according to a second embodiment of the present disclosure will be described with reference to FIGS. 13 and 14.

FIG. 13 is an exemplary flowchart schematically illustrating a heating control method of an aerosol generation device according to some embodiments of the present disclosure. In particular, FIG. 13 schematically illustrates a method of controlling heating of the aerosol-generating article 150 on the basis of reflection characteristics of the laser.

As illustrated in FIG. 13, the heating control method according to the present embodiment may begin by starting laser heating (S10). For example, the controller 120 may control so that power is supplied to the laser radiation part 140, and as power is supplied thereto, the laser radiation part 140 may radiate a laser toward the aerosol-generating article 150.

In step S20, characteristics of the laser reflected from the aerosol-generating article 150 may be measured (analyzed). For example, the controller 120 may detect a laser beam reflected from the aerosol-generating article 150 using a light receiving element (e.g., a photodiode) and may measure (analyze) characteristics of the detected laser beam. Here, examples of the characteristics of the laser beam may include the amount, wavelength, frequency, energy level, etc., but the characteristics are not limited thereto.

In step S30, a heating state of the region irradiated with the laser (that is, the region of the aerosol-forming substrate 151 that is irradiated with the laser) may be determined on the basis of a result of the measurement. For example, the controller 120 may determine the degree of carbonization, temperature, etc. of the region irradiated with the laser on the basis of the characteristics of the reflected laser. As a more specific example, the controller 120 may determine the degree of carbonization of the region irradiated with the laser on the basis of the amount of the reflected laser. In order to further provide convenience of understanding, additional description will be given with reference to FIG. 14.

FIG. 14 illustrates an example in which a second radiation region 147 of the aerosol-forming substrate 151 is carbonized more than a first radiation region 146 thereof.

Referring to FIG. 14, a typical aerosol-forming substrate 151 such as a tobacco material changes color as it is carbonized (e.g., the color changes to brown→ black- gray). Also, when the color changes, since characteristics of laser beams 148 and 149 reflected from the first radiation region 146 and the second radiation region 147, respectively, also change, the degree of carbonization of the corresponding regions 146 and 147 may be determined on the basis of the characteristics of the reflected laser beams 148 and 149. For example, when the color of the second radiation region 147 changes from brown to black due to carbonization, the second radiation region 147 absorbs more laser beam, and thus the amount of the reflected laser beam 149 is reduced. Therefore, the controller 120 may determine the degree of carbonization of the second radiation region 147 on the basis of the amount of the reflected laser beam 149.

Description will be given by referring back to FIG. 13.

In step S40, heating control may be performed on the basis of a result of the determination. However, a specific heating control method may vary.

In one example, a site irradiated with the laser may be controlled on the basis of a result of the determination. For example, in a case in which the current radiation region of the aerosol-forming substrate 151 is determined as having been carbonized to a reference value or more, the controller 120 may change the current radiation region to another region (e.g., to a non-carbonized region). For example, the controller 120 may move the laser radiation part 140 and/or the aerosol-generating article 150 to change the current radiation region. The controller 120 may irradiate one or more candidate regions with laser and determine a degree of carbonization of each candidate region on the basis of the laser reflected from each candidate region and may change the current radiation region to a candidate region whose degree of carbonization is less than the reference value. Alternatively, the controller 120 may change the current radiation region to a random point. Alternatively, in a case in which each region of the aerosol-forming substrate 151 is sequentially heated, the controller 120 may change the current radiation region to a subsequent region.

As another example, the radiation region of the laser may be adjusted on the basis of a result of the determination. For this, the description given above with reference to FIG. 12 may be referenced.

As still another example, the radiation intensity of the laser may be controlled on the basis of a result of the determination. For example, in a case in which the current radiation region of the aerosol-forming substrate 151 is determined as having been carbonized to a reference value or more, the controller 120 may decrease the radiation intensity of the laser. In the opposite case, the controller 120 may increase the radiation intensity of the laser.

As yet another example, a movement speed of the laser radiation part 140 and/or the aerosol-generating article 150 may be controlled on the basis of a result of the determination. For example, in a case in which the current radiation region of the aerosol-forming substrate 151 is determined as having been carbonized to a reference value or more, the controller 120 may increase the movement speed of the laser radiation part 140 and/or the aerosol-generating article 150. In the opposite case, the controller 120 may decrease the movement speed.

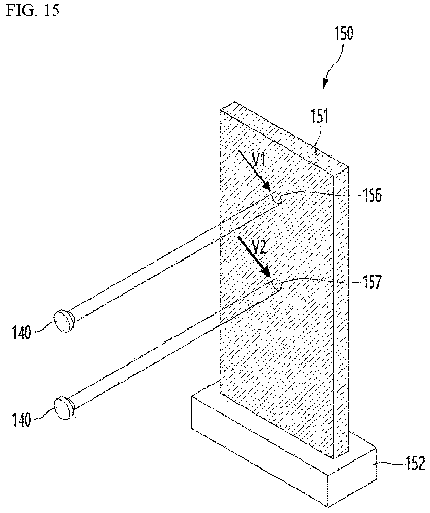

Hereinafter, a heating control method of an aerosol generation device according to a third embodiment of the present disclosure will be described with reference to FIG. 15. In FIG. 15, thicknesses of arrows indicate sizes of movement speeds V1 and V2.

Referring to FIG. 15, the present embodiment relates to a method of performing heating control on the basis of a movement speed of the aerosol-generating article 150 and/or the laser radiation part 140. For example, as illustrated, the controller 120 may control the movement speed (e.g., V1 or V2) of the aerosol-generating article 150 to adjust the amount of laser energy per unit area (that is, a radiation time of laser per unit area or a heating strength per unit area) that is radiated toward the aerosol-generating article 150, and accordingly, heating of the aerosol-generating article 150 can be precisely controlled.

Specifically, when it is assumed that the laser radiation part 140 radiates laser with the same intensity (output) and radiation area, heating strengths (or heating temperatures) of radiation regions 156 and 157 are inevitably changed according to the movement speed (e.g., V1 or V2) of the aerosol-generating article 150. For example, in a case in which the aerosol-generating article 150 moves at a relatively low speed V1, the time during which the radiation region 156 is exposed to laser is long, and thus the radiation region 156 may be heated with a relatively high strength. Conversely, in a case in which the aerosol-generating article 150 moves at a relatively high speed V2, the time during which the radiation region 157 is exposed to laser is short, and thus the radiation region 157 may be heated with a relatively low strength.

Therefore, the controller 120 may adjust the movement speeds of the laser radiation part 140 and/or the aerosol-generating article 150 to precisely control heating of the aerosol-generating article 150. For example, the controller 120 may increase or decrease the movement speeds of the laser radiation part 140 and/or the aerosol-generating article 150 to precisely control the strength (degree) of heating the aerosol-generating article 150 (e.g., the controller 120 may decrease the movement speed to increase the heating strength or increase the movement speed to decrease the heating strength).

The heating control methods of an aerosol generation device according to the first to third embodiments of the present disclosure have been described above with reference to FIGS. 12 to 15. Although each of the embodiments has been separately described, the above-described embodiments may be combined in various forms.

The present disclosure or the operation of the controller 120 described above with reference to FIGS. 1 to 15 may be at least partially implemented with computer-readable code on computer-readable recording media. Examples of the computer-readable recording media may include removable recording media (a compact disc (CD), a digital versatile disc (DVD), a Blu-Ray disk, a Universal Serial Bus (USB) storage device, or a removable hard disk) or non-removable recording media (a read-only memory (ROM), a random access memory (RAM), or a built-in hard disk). Computer programs recorded in the computer-readable recording media may be sent to other computing devices through a network, such as the Internet, and installed on the other computing devices to be used in the other computing devices.

The embodiments described above should be understood as being illustrative, instead of limiting, in all aspects.

## Claims

1. An aerosol generation device (100) comprising:
an aerosol-generating article (150);
a laser radiation part (140) configured to radiate a laser and heat the aerosol-generating article (150) to generate an aerosol; and
a controller (120) configured to control the laser radiation part (140) so that a radiation area of the laser is adjusted, wherein the controller (120) is configured to control heating of the aerosol-generating article (150) on the basis of characteristics of the laser reflected from the aerosol-generating article (150).

2. The aerosol generation device of claim 1, wherein the aerosol-generating article (150) is made of a cylindrical aerosol-forming substrate (151) that is not surrounded by a wrapper.

3. The aerosol generation device of claim 1, wherein the aerosol-generating article (150) is made of a flat aerosol-forming substrate (151) that is not surrounded by a wrapper.

4. The aerosol generation device of claim 1, wherein the controller (120) is configured to increase a size of the radiation area of the laser as a designated point in time elapses.

5. The aerosol generation device of claim 1, wherein the adjusted size of the radiation area is in a range of 1 mm² to 10 mm².

6. The aerosol generation device of claim 1, wherein the laser radiation part (140) includes a focal length adjustable lens; and the controller (120) is configured to adjust a focal length of the lens to adjust the radiation area of the laser.

7. The aerosol generation device of claim 1, wherein the controller (120) is configured to adjust a radiation distance from the laser radiation part (140) to the aerosol-generating article (150) to adjust the radiation area of the laser.

8. The aerosol generation device of claim 1, wherein, on the basis of the amount of the reflected laser, the controller (120) is configured to determine a heating state of a region of the aerosol-generating article (150) that is irradiated with the laser, and on the basis of a result of the determination, the controller (120) is configured to control heating of the aerosol-generating article (150).

9. The aerosol generation device of claim 8, wherein the controller (120) is configured to control the region of the aerosol-generating article (150) irradiated with the laser to be changed on the basis of the result of the determination.

10. The aerosol generation device of claim 1, wherein:
at least one of the aerosol-generating article (150) and the laser radiation part (140) is configured to be movable; and
the controller (120) is configured to adjust a movement speed of the at least one to control heating of the aerosol-generating article (150).

## Patentansprüche

1. Aerosolerzeugungsvorrichtung (100), die Folgendes umfasst:
ein aerosolerzeugendes Erzeugnis (150);
eine Laserstrahlungskomponente (140), die konfiguriert ist, Laserlicht auszustrahlen und das aerosolerzeugende Erzeugnis (150) zu erhitzen, um ein Aerosol zu erzeugen; und
eine Steuereinheit (120), die konfiguriert ist, die Laserstrahlungskomponente (140) zu steuern, derart, dass ein Strahlungsbereich des Lasers eingestellt wird, wobei die Steuereinheit (120) konfiguriert ist, das Erhitzen des aerosolerzeugenden Erzeugnisses (150) auf der Grundlage von Eigenschaften des Laserlichts, das vom aerosolerzeugenden Erzeugnis (150) reflektiert wird, zu steuern.

2. Aerosolerzeugungsvorrichtung nach Anspruch 1, wobei das aerosolerzeugende Erzeugnis (150) aus einem zylindrischen aerosolbildenden Substrat (151), das nicht von einer Umhüllung umgeben ist, hergestellt ist.

3. Aerosolerzeugungsvorrichtung nach Anspruch 1, wobei das aerosolerzeugende Erzeugnis (150) aus einem flachen aerosolbildenden Substrat (151), das nicht von einer Umhüllung umgeben ist, hergestellt ist.

4. Aerosolerzeugungsvorrichtung nach Anspruch 1, wobei die Steuereinheit (120) konfiguriert ist, eine Größe des Strahlungsbereichs des Lasers zu vergrößern, wenn eine bezeichneter Zeitpunkt verstrichen ist.

5. Aerosolerzeugungsvorrichtung nach Anspruch 1, wobei die eingestellte Größe des Strahlungsbereichs in einem Bereich von 1 mm² bis 10 mm² liegt.

6. Aerosolerzeugungsvorrichtung nach Anspruch 1, wobei die Laserstrahlungskomponente (140) eine Linse mit einstellbarer Brennweite enthält; und die Steuereinheit (120) konfiguriert ist, eine Brennweite der Linse einzustellen, um den Strahlungsbereich des Lasers einzustellen.

7. Aerosolerzeugungsvorrichtung nach Anspruch 1, wobei die Steuereinheit (120) konfiguriert ist, eine Strahlungsstrecke von der Laserstrahlungskomponente (140) bis zum aerosolerzeugenden Erzeugnis (150) einzustellen, um den Strahlungsbereich des Lasers einzustellen.

8. Aerosolerzeugungsvorrichtung nach Anspruch 1, wobei die Steuereinheit (120) konfiguriert ist, auf der Grundlage der Menge des reflektierten Laserlichts einen Erhitzungszustand eines Bereichs des aerosolerzeugenden Erzeugnisses (150), der mit dem Laser bestrahlt wird, zu bestimmen, und die Steuereinheit (120) konfiguriert ist, das Erhitzen des aerosolerzeugenden Erzeugnisses (150) auf der Grundlage eines Ergebnisses der Bestimmung zu steuern.

9. Aerosolerzeugungsvorrichtung nach Anspruch 8, wobei die Steuereinheit (120) konfiguriert ist, den Bereich des aerosolerzeugenden Erzeugnisses (150), der mit dem Laser bestrahlt wird, derart zu steuern, dass er auf der Grundlage des Ergebnisses der Bestimmung geändert wird.

10. Aerosolerzeugungsvorrichtung nach Anspruch 1, wobei
das aerosolerzeugende Erzeugnis (150) und/oder die Laserstrahlungskomponente (140) konfiguriert sind, beweglich zu sein; und
die Steuereinheit (120) konfiguriert ist, eine Bewegungsgeschwindigkeit des einen und/oder der anderen einzustellen, um das Erhitzen des aerosolerzeugenden Erzeugnisses (150) zu steuern.

## Revendications

1. Dispositif de production d'aérosol (100) comportant :
un article de production d'aérosol (150) ; et
une pièce de rayonnement laser (140) configurée pour émettre un laser et chauffer l'article de production d'aérosol (150) afin de produire un aérosol ; et
une commande (120) configurée pour commander la pièce de rayonnement laser (140) de sorte qu'une zone de rayonnement du laser est réglée, dans lequel la commande (120) est configurée pour commander un chauffage de l'article de production d'aérosol (150) sur la base de caractéristiques du laser réfléchi par l'article de production d'aérosol (150).

2. Dispositif de production d'aérosol selon la revendication 1, dans lequel l'article de production d'aérosol (150) est constitué d'un substrat de formation d'aérosol cylindrique (151) qui n'est pas entouré par une enveloppe.

3. Dispositif de production d'aérosol selon la revendication 1, dans lequel l'article de production d'aérosol (150) est constitué d'un substrat de formation d'aérosol plat (151) qui n'est pas entouré par une enveloppe.

4. Dispositif de production d'aérosol selon la revendication 1, dans lequel la commande (120) est configurée pour augmenter une taille de la zone de rayonnement du laser lorsqu'un point désigné dans le temps s'écoule.

5. Dispositif de production d'aérosol selon la revendication 1, dans lequel la taille réglée de la zone de rayonnement est dans un intervalle de 1 mm² à 10 mm².

6. Dispositif de production d'aérosol selon la revendication 1, dans lequel la pièce de rayonnement laser (140) inclut une lentille à longueur focale réglable ; et la commande (120) est configurée pour régler une longueur focale de la lentille afin de régler la zone de rayonnement du laser.

7. Dispositif de production d'aérosol selon la revendication 1, dans lequel la commande (120) est configurée pour régler une distance de rayonnement de la partie de rayonnement laser (140) jusqu'à l'article de production d'aérosol (150) afin de régler la zone de rayonnement du laser.

8. Dispositif de production d'aérosol selon la revendication 1, dans lequel, sur la base de la quantité du laser réfléchi, la commande (120) est configurée pour déterminer un état de chauffage d'une zone de l'article de production d'aérosol (150) qui est soumise au rayonnement laser, et sur la base d'un résultat de la détermination, la commande (120) est configurée pour commander un chauffage de l'article de production d'aérosol (150).

9. Dispositif de production d'aérosol selon la revendication 8, dans lequel la commande (120) est configurée pour commander la zone de l'article de production d'aérosol (150) soumise au rayonnement laser à changer sur la base du résultat de la détermination.

10. Dispositif de production d'aérosol selon la revendication 1, dans lequel :
au moins un élément parmi l'article de production d'aérosol (150) et la pièce de rayonnement laser (140) est configuré pour être mobile ; et
la commande (120) est configurée pour régler une vitesse de déplacement du au moins un élément afin de commander un chauffage de l'article de production d'aérosol (150).
